# FASCICULE DE BREVET EUROPEEN

(11) **EP 1 125 965 B1**
(45) Date de publication et mention de la délivrance du brevet: **06.04.2005**
(21) Numéro de dépôt: 01400235.6
(22) Date de dépôt: 30.01.2001
(51) Int. Cl.: C08J 5/00

(54) **Préforme souple expansible et durcissable contenant des résines insaturées, pour le tubage d'un puits ou d'une canalisation**
Ungesättigte Harze enthaltende bläh- und härtbare Vorform sowie deren Verwendung in Bohrlöchern oder der Kanalisation
Expandable and settable deployable preform containing unsaturated resins, use for casing of wells or canalisation

(30) Priorité: 08.02.2000 FR 0001617
(43) Date de publication de la demande: 22.08.2001
(73) Titulaire: Institut Français du Pétrole, 92852 Rueil-Malmaison Cedex (FR)
(72) Inventeur: Mariaggi, Paul, 38200 Seyssuel (FR); Audigier, Dominique, 69390 Vourles (FR); Hauviller, Frédérique, 69230 Saint Genis Laval (FR)

(56) Documents cités:
- EP-A- 0 542 584
- WO-A-91/18180
- WO-A-96/21083
- WO-A-98/59151
- FR-A- 2 753 978
- FR-A- 2 780 751
- GB-A- 2 063 888
- US-A- 5 348 084
- US-A- 5 436 396

## Description

La présente invention concerne une préforme souple dépliable ou expansible radialement pour former après déploiement une structure tubulaire durcissable par polymérisation après sa mise en place dans un puits ou une canalisation le plus souvent chaude, dont elle épouse sensiblement la forme après durcissement, pour y constituer habituellement un tubage le plus souvent sensiblement cylindrique.

On connaît déjà des préformes dont les parois sont en matériaux souples susceptibles d'être repliées ou concentrées sur elles-mêmes de manière à présenter un encombrement radial nettement plus faible que le diamètre du puits ou de la canalisation à tuber ou à chemiser. Dans le cas d'une réparation localisée au sein du puits ou du tube, la préforme est introduite dans le puits ou la canalisation à l'état replié ou condensé sur elle-même. Une fois positionnée à l'endroit voulu, la préforme est déployée par déformation radiale vers l'extérieur, par exemple par introduction à l'intérieur de celle-ci d'un fluide de gonflage tel qu'un gaz ou un liquide par exemple. Sous l'effet de la pression appliquée elle épouse alors la forme du puits ou de la canalisation. Ces préformes comprennent habituellement une résine durcissable à chaud. Généralement, cette résine fait partie de la paroi constitutive de la préforme et a très souvent été introduite par imprégnation des fibres qui participent à la formation de cette paroi. Le durcissement de la résine par polymérisation à chaud peut être dû à la température régnant dans le puits, mais il peut également être provoqué soit par introduction d'un fluide chaud à l'intérieur de la préforme, soit par effet joule au moyen de résistances électriques appropriées disposées dans la préforme. Par exemple il est possible d'utiliser des résistances électriques faisant partie de l'armature de la paroi de la préforme imprégnée de résine polymérisable. Il est également possible d'utiliser le dégagement de chaleur provoqué par une réaction exothermique que l'on déclenche à l'intérieur de la préforme, le plus souvent par mise en contact de réactifs au moment voulu. Il est aussi possible d'introduire au voisinage de la résine une source de rayonnement électromagnétique de type micro-ondes par exemple.

La préforme selon la présente invention peut être mise en place et amenée sans qu'il soit nécessaire d'utiliser un ciment. Au sens de la présente invention on désigne par préforme souple tout assemblage possédant de préférence un système de déclenchement de polymérisation permettant de maintenir dans un milieu confiné, de préférence entre deux peaux extérieures et intérieures habituellement en matériau élastique, une résine polymérisable formant après polymérisation un élément constitutif de la future structure rigide de ladite préforme. De telles préformes sont par exemple décrites dans les documents de brevets FR-A-2 753 978, FR-A-2 722 239, WO-A-94/21 887, WO-A-91/18180 et WO-A-94/25 655.

Les préformes selon l'invention comportent dans leurs constitutions une résine polymérisable ayant des caractéristiques particulières. Il est en effet nécessaire, en particulier pour leurs utilisations en puits et notamment des puits pétroliers chauds, que la résine présente la latence réactive la plus élevée possible. Ladite résine doit permettre l'imprégnation des fibres qui sont un élément constitutif de ladite préforme par toutes les techniques appropriées, ainsi que le stockage, le transport de la dite préforme, ainsi que la durée de mise en place dans le puits ou canalisation le plus souvent chaude, sans que la réaction de polymérisation ne commence ou est un avancement trop important. Il est aussi indispensable que la résine utilisée confère à la préforme une fois polymérisée des propriétés mécaniques élevées, une résistance au vieillissement hydrothermique (c'est-à-dire à l'hydrolyse à la température d'utilisation), une résistance chimique importante et une absorption la plus faible possible en eau, pétrole, et effluents divers présents dans le milieu d'utilisation.

La présente invention concerne des préformes souples contenant habituellement dans leurs constitutions des compositions de résines à forte latence ayant une transition vitreuse d'au moins 90 °C, de préférence d'au moins 120 °C, et souvent d'au moins 180 °C. Ces résines comprennent au moins une résine comportant dans sa formule chimique au moins une liaison multiple (habituellement une double liaison) réactive susceptible de réagir ultérieurement sur des composés comportant dans leur constitution au un moins une liaison multiple et de préférence plusieurs liaison multiple (habituellement des doubles liaisons) réactive(s) terminale(s) ou positionnée(s) d'un bout à l'autre de la chaîne moléculaire et/ou en groupe pendant (sur une chaîne latérale par rapport à la chaîne principale), éventuellement associée à au moins un oligomère et/ou à au moins un monomère polymérisable comportant dans leurs formules chimiques au moins une liaison multiple (habituellement une double liaison) réactive susceptible de réagir ultérieurement sur des composés comportant dans leur constitution au un moins une liaison multiple et de préférence plusieurs liaisons multiples (habituellement des doubles liaisons) réactive(s) terminale(s) ou positionnée(s) d'un bout à l'autre de la chaîne moléculaire et/ou en groupe pendant (sur une chaîne latérale par rapport à la chaîne principale). Parmi ces produits l'on peut citer les composés vinyliques, acryliques, méthacryliques, allyliques, maléiques. Parmi les résines utilisées dans le cadre de la présente invention, une famille et une sous-famille de celle-ci sont principalement utilisées soit seules, soit en mélanges ou combinées dans une même formule chimique, dans ce cas la préforme souple contiendra au moins deux résines différentes. Ces deux familles sont définies ci-après. Selon la présente description le terme résine désigne des pré-polymères c'est-à-dire des composés pouvant former dans certaines conditions des composés polymères de masses moléculaires plus élevées que celle desdits pré-polymères.

Ladite famille comprend les résines polyesters insaturées le plus souvent synthétisées à partir d'au moins un polyol saturé ou insaturé, et d'au moins un diacide ou un anhydride saturé ou insaturé, l'un au moins de ces composés étant un composé insaturé. Certaines de ces résines pouvant comporter dans leur constitution des groupements uréthanes ou éventuellement d'autres groupements pouvant réagir sur la ou les insaturation(s) contenue(s) dans ladite résine.

L'on peut citer pour exemples et à titre non limitatif
- pour le ou les polyol(s) : les butylèneglycols, le néopentylglycol, les néopentylglycols substitués par des halogènes tel que le néopentylglycol bromé, le triméthylpentanediol, le 1,4-cyclohexanediméthanol, les diols lourds obtenus à partir du bisphénol A, du bisphénol F, du bisphénol AF, les bisphénols cités ci-devant oxyalkylés tel que les bisphénol A, F et AF-oxyéthylé ou oxypropylé, les mêmes formules citées ci-dessus comportant au moins un halogène par exemple du chlore et/ou du brome sur le et/ou les noyau(x) aromatique(s). Peuvent être également employés les produits ci-dessus dont le et/ou les noyau(x) aromatique(s) à/ont été au moins partiellement hydrogéné(s), les alcools lourds de types novolaques, et de type crésols-novolaques ;
- pour le ou les anhydride(s) et acide(s) saturé(s) ou insaturés et de préférence insaturé(s) : l'anhydride maléique, l'acide maléique, l'acide fumarique, l'acide itaconique, l'acide citraconique, les acides cyclaniques obtenus par exemple à partir de l'anhydride hexahydrophtalique, les acides isophtalique et téréphtalique, les anhydrides tels que par exemple l'anhydride tétrahydrophtalique, l'anhydride méthylnadique, l'anhydride hexahydrophtalique, les anhydrides phtaliques halogénés tels que l'anhydride tétrachlorophtalique, l'anhydride tétrabromophtalique ou l'anhydride hexachloro-endométhylène tétrahydrophtalique.

Ladite sous famille comprend les résines vinyl-esters.

Peuvent être retenus dans cette catégorie toutes les résines issues de la réaction de composés comportant au moins un diépoxyde sur des acides insaturés par exemple de type acrylique. Parmi les composés comportant au moins un diépoxyde on peut citer par exemple les polyépoxydes synthétisés à partir du bisphénol A, du bisphénol F, du bisphénol AF et des résines novolaques et crésols-novolaques. Parmi les acides insaturés de type acrylique on peut citer l'acide acrylique et l'acide méthacrylique. On peut également citer dans cette sous famille certaines compositions commerciales de type vinyl-esters de la série des EBECRYL® de UCB Chemicals, DIACRYL® de AKZO NOBEL, ATLAC® de DSM, et DERAKANE® de DOW Chemicals.

Les résines polymères de famille et de la sous famille citées ci-dessus pourront être soit mélangées entre elles soit diluées avec d'autres monomères et/ou des oligomères insaturés et copolymérisables qui sont alors considérés comme des solvants réactifs.

Par exemple l'on peut citer : le styrène, le triacrylate de triméthyolpropane, le divinyl benzène, l'acrylate de butyle, l'acrylate de tertiobutyle, l'acrylate de 2-éthyl-hexyle, l'acrylate de méthyle, l'acrylate d'éthyle, l'acrylate d'hydroxy propyle, l'acrylate de 2-hydroxy éthyle, le méthacrylate de méthyle, le méthacrylate d'éthyle, le monochlorostyrène, le dichlorostyrène, le monobromostyrène et le dibromostyrène, le vinyl toluène, l'acétate de vinyl, l'orthophtalate de diallyle, l'isophtalate de diallyle, le cyanurate de triallyle, le carbonate de triallyle, le carbonate de diallylglycol, l'acrylate ou le diméthacrylate du bisphénol A, F ou AF, le diacrylate ou diméthacrylate du bisphénol A, F ou AF dioxyalkylè ou polyoxyalkylé dans lesquels le ou les groupe(s) alkyle(s) comporte(nt) de 2 à 24 atomes de carbone, par exemple les composés diéthoxylé ou tétraéthoxylé. Aux produits cités ci-dessus peuvent être ajoutés au moins une composition commerciale ne faisant pas parties de la sous famille des vinyl esters polymères qui sont habituellement soit sous forme de monomères, soit sous forme d'oligomères ou de prépolymères de la série des EBECRYL® de UCB Chemicals, DIACRYL® de AKZO NOBEL, ATLAC® de DSM, et DERAKANE® de DOW Chemicals. Parmi les compositions commerciales utilisables également dans le cadre de la présente invention t qui sont soit sous forme de monomères, d'oligomères ou de prépolymères, certaines sont considérées par les hommes de métier comme faisant partie de la série des EBECRYL® de UCB Chemicals, DIACRYL® de AKZO NOBEL, ATLAC® de DSM, et DERAKANE® de DOW Chemicals.

Les réactions de polymérisation de la résine ou des mélanges contenant au moins l'une des résines définies ci-dessus éventuellement au moins l'un des monomères et/ou des oligomères insaturés et copolymérisables qui sont alors considérés comme des solvants réactifs, sont initiées en fonction des températures de mise en oeuvre de la préforme souple par le choix d'au moins un amorceur approprié choisi dans le groupe des peroxydes organiques, tels que les peroxydes de cétones, des hydroperoxydes, des peroxydes de diacyles, des peresters. D'autres amorceurs de réaction peuvent être utilisés, par exemple, le 2-2'-azobis (isobutyronitrile), le 2-2'-azobis (2-méthylbutyronitrile), souvent désignés par les hommes du métier par les initiales AIBN de AzoIsoButyroNitriles, ou d'autres amorceurs tels que K₂ S₂ O₈ ou le soufre. Ce ou ces amorceur(s) ou initiateur(s) pourront être selon les cas associés à au moins un inhibiteur de polymérisation tels que par exemple les hydroquinones, le tertiobutyl catéchol, ou la réaction de polymérisation pourra être accélérée par la présence d'au moins un accélérateur tel que par exemple un sel de cobalt et/ou une amine tertiaire. Dans le cadre de la présente invention on utilisera un ou plusieurs amorceurs radicalaires et éventuellement un ou plusieurs inhibiteurs.

Les compositions contenues dans la préforme souple de la présente invention doivent répondre aux conditions de mise en oeuvre suivantes, et ceci de manière à pouvoir être employées pour la fabrication desdites préformes souples de la présente invention :
- être capable de procurer une durée de vie en pot (stockage) ou sur fibre de renfort par exemple fibre de verre ou équivalent, égale ou supérieure à 20 jours, habituellement d'environ trente jours à environ 4 mois, et le plus souvent d'environ 30 jours à 2 mois et ceci pour une température moyenne de stockage égale ou inférieur à 22 °C, habituellement d'environ 0 °C à environ 15 °C et le plus souvent d'environ 0 °C à environ 5 °C ;
- être capable de procurer après stockage à 22 °C en pot ou sur support dans les conditions décrites ci-dessus, une latence résiduelle d'au moins trois heures, de préférence d'au moins six heures, à une température d'environs 10 °C à environ 90 °C, et le plus souvent d'au moins huit heures à une température d'environ 20 °C à environ 80 °C, par exemple aux alentours d'environ 50 °C ;
- être capable de procurer après stockage en pot ou sur support fibreux pendant une durée d'utilisation d'au moins 60 jours, habituellement d'environ 60 jours à environ 6 mois, et le plus souvent d'environ 60 jours à environ 3 mois à une température inférieure ou égale à 4°C, habituellement d'environ -5 °C à environ +5 °C et le plus souvent d'environ -5 °C à environ 0°C, une latence résiduelle d'au moins 8 heures, de préférence d'au moins 10 heures et le plus souvent d'au moins 11 heures, à une température d'environ 40 °C à environ 80 °C et le plus souvent d'environ 50 °C à environ 75 °C, par exemple aux alentours d'environ 70 °C ;
- pouvoir être déposées sur supports fibreux par exemple non tissés ou tissés en 2D ou 3D constituant habituellement le renfort de la préforme souple. Parmi ces supports fibreux peuvent être cités par exemple, les fibres de verre, de basalte, de carbone, de KEVLAR®, de céramique, les fibres naturelles, synthétiques ou métalliques. L'enduction par résines des supports fibreux cités ci-dessus pourra se faire soit manuellement, soit mécaniquement ou par injection sous pression ou sous vide selon la technique dite RTM (initiales anglo-saxonnes de Resin Transfert Molding) ;
- on utilisera de préférence des compositions ayant une viscosité dynamique relativement faible permettant une imprégnation de bonne qualité des fibres formant la structure de la préforme. Cette viscosité dynamique sera à la température choisie lors de l'imprégnation des fibres, par exemple à d'environ 20 °C à environ 70 °C, souvent inférieure à environ 2500 mPa.s (milliPascal seconde) et habituellement d'environ 300 à environ 2000 mPa.s ; elle peut être de l'ordre de 1500 mPa.s ;
- respecter les règles d'hygiènes et de sécurité ;
- ne pas être agressives chimiquement ou par gonflement des peaux élastiques intérieures et extérieures constituant la protection de la préforme ;
- avoir une température de polymérisation compatible avec la résistance à la chaleur des polymères et peaux élastiques constituants les parois de la préforme, c'est à dire le plus souvent une température de polymérisation inférieure ou égale à environ 160 °C et souvent inférieur ou égale à 140 °C ;
- avoir une durée de polymérisation la plus réduite possible à la température de polymérisation souhaitée, par exemple une durée de polymérisation à 140 °C d'au plus 9 heures et de préférence d'au plus 8 heures. Cette durée sera par exemple d'au plus 7 heures à 150 °C ou d'au plus 6 heures à 160 °C. Souvent la durée de polymérisation sera d'au plus 6 heures à 150 °C ou d'au plus 5 heures à 160 °C.

Les composites issus des exemples de préparation cités précédemment devront :
- procurer après polymérisation de la résine un matériau ayant de bonnes propriétés mécaniques, ces propriétés étant au moins égales à celles obtenues avec les résines époxydes imprégnant les mêmes supports fibreux que ceux cités ci-devant ;
- avoir une absorption pondérale de pétrole ou produits présents dans les puits pétroliers minimale et habituellement inférieure à environ 3 % et souvent inférieur à environ 1 % à une température d'environ 90 °C ;
- avoir enfin une absorption pondérale d'eau minimale devant être de préférence inférieure à 4 % et souvent inférieure à 3 % à 90 °C.

Dans une mise en oeuvre particulière de l'invention, les compositions selon l'invention contiendront un contrôleur d'écoulement (en anglais Flow regulator). Ce contrôleur d'écoulement pouvant selon le choix des produits jouer le rôle de réducteur d'agent de retrait après polymérisation. Cet ajout ou association d'au moins un contrôleur d'écoulement permet d'éviter lors du pressage de plusieurs couches d'imprégnés, l'écoulement de la résine par essorage au moment du déploiement de la préforme. La quantité volumique de résine utilisée est habituellement d'environ 40 % à environ 60 % le complément à 100 % étant essentiellement formés par les fibres. Le plus souvent on utilisera une quantité volumique de résine et de fibres sensiblement égales. Ce contrôleur d'écoulement préserve ainsi le rapport volumique fibre/matrice qui est de préférence d'environ 1:1. Ce rapport est celui qui permet d'avoir les meilleures propriétés mécaniques sur composite et le plus faible retrait après l'étape de polymérisation. Parmi les agents susceptibles de procurer les propriétés décrites ci-dessus l'on peut citer par exemple : le polystyrène, le polyvinyle acétate, le polyméthylméthacrylate, les polyesters saturés, les polycaprolactames. La proportion de contrôleur d'écoulement est habituellement d'environ 1 à 15 % en poids par rapport au poids final de la composition. Les préformes souples selon la présente invention sont en particulier employées pour réparer ou manchonner des puits ou des canalisations et leur durcissement par polymérisation utilise le plus souvent à partir d'amorceurs de polymérisation de type radicalaire tel que des peroxydes organiques dont la température d'initiation de réaction sera appropriée avec la température dudit puits ou de ladite canalisation.

Dans le but de montrer les avantages principaux et les propriétés apportées par le choix de formulations utilisée pour fabriquer les préformes souples selon la présente invention et par référence à l'utilisation d'une résine époxyde pour former des préformes souples identiques à l'exception de la résine employée, les Exemples 1 à 6, ainsi que les tests pratiqués sont présentés ci-après. Ces essais sont réalisés avec les résines et durcisseurs présentés ci-après.

### Formulation 1 : Résine vinyl ester commerciale. (selon l'invention)

A 100 g de résine EBECRYL® 616 d'UCB (époxydiméthacrylate oligomère), on ajoute de manière optimisée (voir Tableau 3) 3 parties en poids pour 100 g de résine (ppcr) de PERKADOX® BC de AKZO NOBEL et 3 ppcr d'inhibiteur BC 500 de SCPO, Société Chalonnaise de Peroxydes Organiques.

### Formulation 2 : Résine et formulation expérimentale. (selon l'invention)

A 100 g de résine RTC 144222-12, résine expérimentale à base de diphénol A diméthacrylate de la société DOW Deutschland Inc, passée en solution dans de l'EBECRYL® 150 d'UCB on ajoute 3 ppcr d'inhibiteur BC 500 de SCPO.

### Formulation 3 : résine époxyde connue et décrite dans l'art antérieur dans le document de brevet EP-A-0 833 036. (comparaison)

A 100 g de résine époxyde DGEBA (diglycidyl éther du bisphénol A) LY556 de CIBA, on ajoute 41,3 g d'amine M-DEA [4,4 méthylène bis (2-6-diéthylaniline)] LONZACURE®, de LONZA Ltd.

Les Formulations 1 et 2 sont ensuite polymérisées 2 heures à 120 °C et la Formulation 3 est polymérisée 8 heures à 140 °C.

### EXEMPLE 1

Le test mis en oeuvre dans cet exemple consiste à déterminer le comportement et la résistance du caoutchouc HNBR (caoutchouc nitrile hydrogéné) en présence de solvants réactifs entrant dans la composition de résines insaturées. Cet exemple illustre l'importance du choix des réactifs en fonction de la capacité de résistance des peaux élastiques constituant la préforme souple. Le gonflement pondéral est mesuré par double pesée après immersion de 10 heures à 90 °C dans les fluides suivants :
- Styrène
- (1) Triméthylolpropane triacrylate TMPTA
- (2) EBECRYL® 150 : dérivé du bisphénol A diacrylate oligomère de UCB
- (3) DIACRYL® 101: dérivé du bisphénol A diéthoxylé diméthacrylate de AKZO NOBEL

La chute des propriétés mécaniques et déterminée sur machine de traction selon les normes NFT 46-002 et ISO 37 sur éprouvette Haltère H2 découpées dans des plaques de caoutchouc HNBR vulcanisé. La vitesse de traction étant de 50 millimètre par minute (mm/min).

**TABLEAU 1**

| **Solvants réactifs** | **Gonflement pondéral en %** | **Chute des propriétés mécaniques en %** |
|---|---|---|
| Styrène | 220 | 100 |
| TMPTA ⁽¹⁾ | 24 | 36 |
| Ebecryl® 150 ⁽²⁾ | 6 | 10 |
| Diacryl® 101 ⁽³⁾ | 7 | 8 |

### EXEMPLE 2 : Contrôle du temps de gel en fonction de la température de puits ou canalisations chaudes à chemiser.

Le temps de gel est le temps requis pour une température choisie et une composition donnée, pour atteindre un taux d'avancement de la réaction de polymérisation Xg. Ce taux d'avancement Xg de la réaction au point de gel est un facteur important car il est lié à un changement majeur rhéologique dû à la transformation irréversible d'un liquide visqueux en un gel viscoélastique. Le temps de gel est mesuré avec un appareil commercialisé sous le nom TROMBOMAT® , commercialisé par la société PRODEMAT et qui est capable de déterminer le passage au point de gel et d'évaluer la réactivité du durcisseur à partir du suivi cinétique de la réaction.

Cet exemple (Tableaux 2 et 3) illustre l'importance du peroxyde et de l'inhibiteur sur la latence (temps de gel) nécessaire à la mise en place de préformes souples dans les puits chauds. La résine choisie pour cet exemple est l'EBECRYL® 616 d'UCB.

**TABLEAU 2**

| **Influence du peroxyde sur la latence** | | | | **Comparaison** |
|---|---|---|---|---|
| Résines | Ebecryl® 616 | | | Epoxyde Formulation 3 |
| Peroxyde, 2 ppcr | Trigonox C⁽¹⁾ | Perkadox BC⁽²⁾ | Chaloxyd BCUP⁽³⁾ | |
| Temps de gel à 70 °C | 30 min | 10 h 40 min | 1 h 15 min | 15 h 00 min |

| | | | | |
|---|---|---|---|---|
| (1) Trigonox® C : Tert-butyl peroxybenzaote | | | | |
| (2) Perkadox® BC : Dicumyl peroxyde | | | | |
| (3) Chaloxyd® BCUP : Peroxyde de tertiobutylcumyle | | | | |

**TABLEAU 3**

| **Influence de la proportion d'inhibiteur** | | | | **Comparaison** |
|---|---|---|---|---|
| Vinylester 100 ppcr | Ebecryl 616 | | | |
| Peroxyde 3 ppcr | Perkadox® BC | | | |
| Inhibiteur BC 500⁽¹⁾ | 1 ppcr | 2 ppcr | 3 ppcr | Epoxyde Formulation 3 |
| Temps de gel à 70 °C | 8 h 40 min | 10 h 48 min | 13 h 30 min | 14 h 00 min |

| | | | | |
|---|---|---|---|---|
| (1) Inhibiteur BC500 de SCPO DiTer-Butyle-2,6 Méthyl-4 phénol à 40 % dans le xylène (mélange o, m, p). | | | | |

Les résultats des tests présentés sur les Tableaux 2 et 3 démontrent l'importance de la formulation sur la latence de la résine qui peut être de ce fait ajustée en fonction de la température des puits ou canalisations à réparer.

### EXEMPLE 3 : Transitions vitreuses obtenues et valeurs des absorptions à saturations dans des liquides à 70 °C.

La mesure de la transition vitreuse est effectuée avec un appareil KINEMAT® de la société PRODEMAT. La rampe de montée en température est de 2 °C par minute à partir de 20 °C jusqu'à 250 °C. La transition vitreuse marque le passage de l'état vitreux à l'état caoutchouteux et détermine ainsi la limite d'utilisation en température des résines obtenues à partir des formulations 1, 2 et 3.

Ces résines ont été obtenues par polymérisation durant 2 heures à 120 °C pour les formulations 1 et 2 et 8 heures à 140 °C pour la formulation 3.

L'absorption d'eau de mer et de gazole (considéré comme représentatif du pétrole pour les essais ci-dessous) dans le cas de résines thermodurcissables polymérisées se traduit par une variation progressive de la rigidité des mailles du réseau réticulé. Cette fixation de liquide entraîne un changement du niveau de la transition vitreuse et favorise soit la dégradation par hydrolyse de la résine ou des interfaces avec les fibres de renfort soit la dégradation physique du réseau tridimensionnel par gonflement de celui-ci. Il est donc important que les résines thermodurcissables utilisées dans le cadre de cet objectif de réparation de puits aient des absorptions d'eau et de gazole les plus faibles possibles. L'eau de mer utilisée est une eau reconstituée selon la procédure décrite dans la norme ASTM D-1141-90. Le gazole employé est une coupe 250-350 °C et répond à la désignation Diesel API type 2. Les mesures comparatives d'absorption d'eau et de gazole sont effectuées sur des éprouvettes de résine de 50x50x5 millimètres préalablement polymérisées. L'absorption en liquide est mesurée par différence de masse à intervalle régulier jusqu'au moment où la saturation est atteinte c'est à dire jusqu'à poids constant, ce qui donne le taux de fixation d'eau ou de gazole en pour-cent poids indiqué pour chaque éprouvette obtenues à partir de la polymérisation dans las conditions mentionnées ci-devant des compositions des formules 1 à 3. Les résultats obtenus sont reportés dans le Tableau 4 ci-après :

**TABLEAU 4**

| **Transition vitreuse et absorption à saturation de liquide a 70 °C** | | | |
|---|---|---|---|
| | Transition vitreuse Tg en °C après polymérisation | % pondéral d'H2O | % pondéral de fuel API type 2 (gazole) |
| Formulation 1 | 170 | 2,9 | 0,3 |
| Formulation 2 | 120 | 2,6 | 0,3 |
| Formulation 3 | 157 | 1,8 | 2 |

### EXEMPLE 4 : Propriétés mécaniques sur composite carbone unidirectionnel

La mesure de contrainte interlaminaire en cisaillement trois points est effectuée sur machine INSTRON 1175 selon la procédure décrite dans la norme ISO/FDIS 14130-1997. Le composite test est constitué dans un rapport volumique de 50 % de résine obtenue par polymérisation à partir des formulations 1, 2 et 3 selon les procédures décrites ci-devant et de 50 % de fibres de carbone TORAY vendues sous la référence CAFT 300B. Les résultats présentés dans le Tableau 5 ci-après prennent en compte les valeurs obtenues au temps initial de la fabrication des échantillons et après 1 an de vieillissement hydrolytique (c'est-à-dire en présence d'eau) à 50 °C. Cette étape de vieillissement intègre donc les perturbations du réseau réticulé amenées par l'eau ainsi que les dégradations de l'interface fibre-matrice.

**TABLEAU 5**

| **Propriétés mécaniques sur composite - vieillissement hydrolytique** | | |
|---|---|---|
| | Valeur des contraintes interlaminaires en MPa | |
| Composite : Carbone +résine | t = 0 | t = 1 an |
| Formulation 1 | 75 | 67 |
| Formulation 2 | 80 | 69 |
| Formulation 3 | 73 | 69 |

### EXEMPLE 5 : Chemisage d'un puits expérimental par une matrice organique vinyl ester.

Une préforme étanche constituée d'une peau en élastomère HNBR emprisonnant un pré-imprégné constitué de fibres de carbone TORAY CAFT 300B et d'une matrice organique constituée par la formulation 1 dans un rapport volumétrique fibre matrice de 50/50, est construite en atelier puis stockée à 5 °C pendant 30 jours. Ce stockage à froid simule la phase de transport atelier/chantier. Cette préforme sous sa forme concentrée est ensuite introduite dans un puits à 70 °C. La mise en place de cette préforme dans un puits test pendant 7 heures avant gonflement et déploiement de celle-ci simule son positionnement dans un puits de grande profondeur. La phase de polymérisation après gonflement, déploiement et plaquage sous pression de liquide présent dans le puits de la préforme sur la paroi du puits, est effectué à l'aide d'un chauffage par résistance intégré dans la préforme pendant 2 heures à 120 °C. Le chemisage composite obtenu est comparé dans le Tableau 6 à celui obtenu dans l'Exemple 6 ci-après.

### EXEMPLE 6 : Chemisage d'un puits expérimental par une matrice organique époxyde.

Dans cet exemple, sont reprises toutes les caractéristiques techniques de l'Exemple 5. Seule la résine d'imprégnation est changée. Dans cet exemple on utilise-la résine époxyde décrite ci-devant dans la formulation 3. La durée de polymérisation sera pour cet exemple de 8 heures à 140 °C.

La résistance en traction apparente, d'anneaux découpés dans les chemisages obtenus dans les Exemples 5 et 6, est déterminée par machine de traction INSTRON 1175 par la méthode du disque fendu selon la procédure décrite dans la norme ASTM D-2290 1992. Cette contrainte apparente à l'éclatement est exprimée en MPa (Méga Pascal). Cette mesure, effectuée à 20 °C permet d'apprécier la résistance à l'éclatement des chemisages.

**TABLEAU 6**

| **Composition de la matrice organique du composite** | **Contrainte apparente en traction en MPa** |
|---|---|
| Exemple 5 (Formulation 1) | 1046 |
| Exemple 6 (Formulation 3) | 1150 |

Il est clair que, en fonction des résultats obtenus dans les Exemples 2 à 6 ci-dessus, que les formulations thermodurcissables ayant une transition vitreuse d'au moins 100 °C, et comprenant dans leurs formulations chimiques des doubles liaisons réactives, peuvent être utilisées pour le chemisage de puits ou de tubages ou canalisations le plus souvent chauds.

Ces utilisations s'avèrent possibles à partir du moment où leurs compositions sont ajustées en fonction de la température de service et de la résistance des peaux élastiques constituant les préformes souples. Il est démontré, par les Exemples 2 à 6, que les résines thermodurcissables insaturées, judicieusement formulées, peuvent avoir des propriétés comparables à celles des résines époxydes utilisées dans les mêmes conditions. On remarque par ailleurs que les résines obtenues par polymérisation des formulations chimiques comprenant des doubles liaisons réactives présentent un avantage certain par le fait qu'elles adsorbent une quantité de gazole plus faible que celle adsorbée par les résines époxydes et que de plus la quantité d'eau adsorbée n'est pas significativement plus importante.

## Revendications

1. Préforme souple dépliable radialement pour former après déploiement une structure tubulaire durcissable par polymérisation après sa mise en place dans un puits ou une canalisation dont après durcissement elle épouse sensiblement la forme **caractérisée en ce qu'**elle comprend dans sa constitution au moins une résine comportant dans sa formule chimique au moins une liaison multiple réactive susceptible de réagir ultérieurement sur des composés comportant dans leur constitution au moins une liaison multiple réactive terminale ou positionnée d'un bout à l'autre de la chaîne moléculaire et/ou en groupe pendant.

2. Préforme souple selon la revendication 1 **caractérisée en ce que** la résine comportant au moins une liaison multiple réactive est choisie dans le groupe formé par les résines polyesters insaturés et les résines vinyl-esters.

3. Préforme souple selon l'une des revendications 1 à 3 **caractérisée en ce que** la résine est associée à au moins un oligomère et/ou au moins un monomère polymérisable comportant dans leurs formules chimiques au moins une liaison multiple.

4. Préforme souple selon la revendication 3 **caractérisée en ce que** la résine est associée à au moins un oligomère et/ou au moins un monomère choisi dans le groupe formé par les composés vinyliques, acryliques, méthacryliques, allyliques, maléiques.

5. Préforme souple selon l'une des revendications 1 à 4 **caractérisée en ce que** la résine comportant au moins une liaison multiple réactive est choisie dans le groupe formé par les résines polyesters insaturés synthétisées à partir d'au moins un polyol saturé ou insaturé, et d'au moins un diacide ou un anhydride saturé ou insaturé, l'un au moins de ces composés étant un composé insaturé.

6. Préforme souple selon la revendication 5 **caractérisée en ce que** le polyol utilisé pour la synthèse des polyesters insaturés est choisi dans le groupe formé par les butylèneglycols, le néopentylglycol, les néopentylglycols substitués par des halogènes, le triméthylpentanediol, le 1,4-cyclohexanediméthanol, les diols lourds obtenus à partir du bisphénol A, du bisphénol F, du bisphénol AF, lesdits bisphénols oxyalkylés, les mêmes formules citées ci-dessus comportant au moins un halogène sur le et/ou les noyau(x) aromatique(s), les produits ci-dessus dont le et/ou les noyau(x) aromatique(s) a/ont été au moins partiellement hydrogéné(s), les polyols lourds de types novolaques, et de type crésols novolaques.

7. Préforme selon la revendication 5 **caractérisée en ce que** l'anhydride ou l'acides utilisé pour la synthèse des polyesters insaturés est choisi dans le groupe formé par l'anhydride maléique, l'acide maléique, l'acide fumarique, l'acide itaconique, l'acide citraconique, les acides cyclaniques obtenus par exemple à partir de l'anhydride hexahydrophtalique, les acides isophtalique et téréphtalique, les anhydrides tels que par exemple l'anhydride tétrahydrophtalique, l'anhydride méthylnadique, l'anhydride hexahydrophtalique, les anhydrides phtaliques halogénés tels que l'anhydride tétrachlorophtalique, l'anhydride tétrabromophtalique ou l'anhydride hexachloro-endométhylène tétrahydrophtalique.

8. Préforme souple selon l'une des revendications 1 à 4 **caractérisée en ce que** la résine comportant au moins une liaison multiple réactive est choisie dans le groupe formé par les résines vinyl-esters synthétisées à partir d'un composé comportant au moins un diépoxyde sur au moins un acide insaturé de type acrylique.

9. Préforme souple selon la revendication 8 **caractérisée en ce que** l'acide de type acrylique est choisi dans le groupe formé par l'acide acrylique et l'acide méthacrylique et le diépoxyde est choisi dans le groupe formé par le bisphénol A, le bisphénol F, le bisphénol AF, les résines novolaques et les résines crésols-novolaques.

10. Préforme souple selon l'une des revendications 1 à 9 **caractérisée en ce que** la préforme souple dépliable radialement contient au moins deux résines différentes

11. Préforme selon l'une des revendications 3 à 10 **caractérisée en ce que** l'oligomère et/ou le monomère polymérisable comportant dans leurs formules au moins une liaison multiple est choisi dans le groupe formé par le styrène, le triacrylate de triméthyolpropane, le divinyl benzène, l'acrylate de butyle, l'acrylate de tertiobutyle, l'acrylate de 2-éthyl-hexyle, l'acrylate de méthyle, l'acrylate d'éthyle, l'acrylate d'hydroxy propyle, l'acrylate de 2-hydroxy éthyle, le méthacrylate de méthyle, le méthacrylate d'éthyle, le monochlorostyrène, le dichlorostyrène, le monobromostyrène et le dibromostyrène, le vinyl toluène, l'acétate de vinyl, l'orthophtalate de diallyle, l'isophtalate de diallyle, le cyanurate de triallyle, le carbonate de triallyle, le carbonate de diallylglycol, l'acrylate ou le diméthacrylate du bisphénol A, F ou AF, le diacrylate ou diméthacrylate du bisphénol A, F ou AF dioxyalkylè ou polyoxyalkylé dans lesquels le ou les groupe(s) alkyle(s) comporte(nt) de 2 à 24 atomes de carbone.

12. Préforme souple selon l'une des revendications 1 à 11 **caractérisée en ce que** la préforme souple dépliable radialement contient au moins une résine comportant dans sa formule chimique au moins une liaison multiple et est associée à au moins une composition commerciale ne faisant pas parties de la sous famille des vinyl esters polymères qui sont habituellement soit sous forme de monomères, ou d'oligomères.

13. Préforme souple selon l'une des revendications 1 à 12 **caractérisée en ce que** les réactions de polymérisation de la résine sont initiées en fonction des températures de mise en oeuvre de la préforme souple par le choix d'au moins un amorceur approprié choisi dans le groupe des peroxydes organiques

14. Préforme souple selon l'une des revendications 1 à 12 **caractérisée en ce que** les réactions de polymérisation de la résine sont initiées en fonction des températures de mise en oeuvre de la préforme souple par au moins un amorceur de la famille des Azo IsoButyroNitriles, de préférence choisi dans le groupe formé par le 2-2'-azobis (isobutyronitrile) et le 2-2'-azobis (2-méthylbutyronitrile)

15. Préforme souple l'une des revendications 1 à 12 **caractérisée en ce que** les réactions de polymérisation de la résine sont initiées en fonction des températures de mise en oeuvre de la préforme souple par au moins un amorceur choisi dans le groupe formé par le soufre et le persulfate de potassium de formule moléculaire K₂ S₂ O₈.

16. Préforme souple selon l'une des revendications 13 à 15 **caractérisée en ce que** les réactions de polymérisation de la résine sont initiées en fonction des températures de mise en oeuvre de la préforme souple par au moins un amorceur associé à au moins un accélérateur tel qu'un sel de cobalt et/ou une amine tertiaire.

17. Préforme souple l'une des revendications 13 à 16 **caractérisée en ce que** les réactions de polymérisation de la résine sont initiées en fonction des températures de mise en oeuvre de la préforme souple par au moins un amorceur associé à au moins un inhibiteur de polymérisation tel que les hydroquinones, les tertio butylcatéchols.

18. Préforme souple selon l'une des revendications 1 à 17 **caractérisée en ce qu'**elle contient dans sa constitution au moins une résine ayant une latence résiduelle, après un stockage à 22°C pendant une durée égale ou supérieure à 20 jours, d'au moins 3 heures à une température de 10 °C à 90 °C.

19. Préforme souple selon l'une des revendications 1 à 17 **caractérisée en ce qu'**elle contient dans sa constitution au moins une résine ayant une latence résiduelle, après un stockage à une température inférieure ou égale à 4 °C pendant une durée d'au moins 60 jours, d'au moins 8 heures à une température de 40 à 80 °C.

20. Préforme selon l'une des revendications 1 à 19 **caractérisée en ce que** la résine comportant dans sa formule chimique au moins une liaison multiple réactive susceptible de réagir ultérieurement sur des composés comportant dans leur constitution au moins une liaison multiple réactive terminale ou positionnée d'un bout à l'autre de la chaîne moléculaire et/ou en groupe pendant est choisie dans le groupe formé par les résines ayant une viscosité dynamique inférieure à environ 2500 mPa.s à une température de 20 °C à 70 °C.

21. Préforme selon l'une des revendications 1 à 20 **caractérisée en ce que** la résine comportant dans sa formule chimique au moins une liaison multiple réactive susceptible de réagir ultérieurement sur des composés comportant dans leur constitution au moins une liaison multiple réactive terminale ou positionnée d'un bout à l'autre de la chaîne moléculaire et/ou en groupe pendant est choisie dans le groupe formé par les résines permettant d'imprégner manuellement, mécaniquement ou par le procédé d'injection sous pression ou vide, les supports fibreux constituant le renfort de la dite préforme souple, ledit support étant de préférence choisi dans le groupe formé par les fibres de verre, les fibres de basalte, les fibres de carbone, les fibres céramiques, les fibres naturelles, les fibres synthétiques, et les fibres métalliques.

22. Préforme selon l'une des revendications 1 à 21 **caractérisée en ce que** la résine comportant dans sa formule chimique au moins une liaison multiple réactive susceptible de réagir ultérieurement sur des composés comportant dans leur constitution au moins une liaison multiple réactive terminale ou positionnée d'un bout à l'autre de la chaîne moléculaire et/ou en groupe pendant est choisie dans le groupe formé par les résines non agressives chimiquement ou par gonflement des peaux élastiques intérieures et extérieures constituant la protection de la préforme.

23. Préforme selon l'une des revendications 1 à 22 **caractérisée en ce que** la résine comportant dans sa formule chimique au moins une liaison multiple réactive susceptible de réagir ultérieurement sur des composés comportant dans leur constitution au moins une liaison multiple réactive terminale ou positionnée d'un bout à l'autre de la chaîne moléculaire et/ou en groupe pendant est choisie dans le groupe formé par les résines ayant à une température de polymérisation compatible avec la résistance à la chaleur des polymères et peaux élastiques et des composants constituants les parois de la préforme.

24. Préforme souple selon la revendication 23 **caractérisée en ce que** la température de polymérisation de la résine est inférieure ou égale à 160 °C.

25. Préforme selon l'une des revendications 1 à 24 **caractérisée en ce que** la résine comportant dans sa formule chimique au moins une liaison multiple réactive susceptible de réagir ultérieurement sur des composés comportant dans leur constitution au moins une liaison multiple réactive terminale ou positionnée d'un bout à l'autre de la chaîne moléculaire et/ou en groupe pendant est choisie dans le groupe formé par les résines formant après polymérisation en combinaison avec un support fibreux un composite ayant une absorption pondérale de pétrole inférieure à 3 % à une température d'environ 90 °C.

26. Préforme selon l'une des revendications 1 à 25 **caractérisée en ce que** la résine comportant dans sa formule chimique au moins une liaison multiple réactive susceptible de réagir ultérieurement sur des composés comportant dans leur constitution au moins une liaison multiple réactive terminale ou positionnée d'un bout à l'autre de la chaîne moléculaire et/ou en groupe pendant est choisie dans le groupe formé par les résines formant après polymérisation en combinaison avec un support fibreux un composite ayant une absorption pondérale d'eau inférieure à 4 % à une température d'environ 90 °C.

27. Préforme selon l'une des revendications 1 à 26 **caractérisée en ce que** la résine comportant dans sa formule chimique au moins une liaison multiple réactive susceptible de réagir ultérieurement sur des composés comportant dans leur constitution au moins une liaison multiple réactive terminale ou positionnée d'un bout à l'autre de la chaîne moléculaire et/ou en groupe pendant est associée à au moins un contrôleur d'écoulement.

28. Préforme souple selon la revendication 27 **caractérisée en ce que** le contrôleur d'écoulement est choisi dans le groupe formé par les polystyrènes, les polyvinylacétates, les polyméthylméthacrylates et les polycaprolactames.

## Patentansprüche

1. Flexible, radial ausbreitbare Vorform, um nach Ausbreitung eine Rohrstruktur auszubilden, die härtbar ist durch Polymerisation nach ihrer Anordnung in einem Bohrloch oder einer Kanalisation, deren Form sie sich nach Härten im Wesentlichen anschmiegt, **dadurch gekennzeichnet, dass** sie in ihrer Zusammensetzung wenigstens ein Harz umfasst, das in seiner chemischen Formel wenigstens eine reaktive Mehrfachbindung umfasst, die in der Lage ist, später auf Verbindungen zu reagieren, die in deren Aufbau wenigstens eine reaktive Mehrfachbindung umfassen, die terminal oder angeordnet an einem Ende der anderen Molekülkette und/oder in einer Seitengruppe ist.

2. Flexible Vorform nach Anspruch 1, **dadurch gekennzeichnet, dass** das wenigstens eine reaktive Mehrfachbindung umfassende Harz gewählt ist aus der Gruppe, die gebildet wird durch die ungesättigten Polyesterharze und die Vinylesterharze.

3. Flexible Vorform nach einem der Ansprüche 1 bis 3, **dadurch gekennzeichnet, dass** das Harz wenigstens einem Oligomer und/oder wenigstens einem polymerisierbaren Monomer zugeordnet ist, die in deren chemischen Formeln wenigstens eine Mehrfachbindung umfassen.

4. Flexible Vorform nach Anspruch 3, **dadurch gekennzeichnet, dass** das Harz mit wenigstens einem Oligomer und/oder wenigstens einem Monomer zugeordnet ist, gewählt aus der Gruppe, die gebildet wird durch die Vinyl-, Acryl-, Methacryl-, Allyl-, Malein-Verbindungen.

5. Flexible Vorform nach einem der Ansprüche 1 bis 4, **dadurch gekennzeichnet, dass** das Harz, das wenigstens eine reaktive Mehrfachbindung umfasst, gewählt ist aus der Gruppe, die gebildet wird durch die ungesättigten Polyesterharze, die aus wenigstens einem gesättigten oder ungesättigten Polyol und wenigstens einer Disäure oder einem gesättigten oder ungesättigten Anhydrid synthetisiert werden, wobei wenigstens die eine dieser Verbindungen eine ungesättigte Verbindung ist.

6. Flexible Vorform nach Anspruch 5, **dadurch gekennzeichnet, dass** das für die Synthese der ungesättigten Polyester verwendete Polyol gewählt ist aus der Gruppe, die gebildet wird durch die Butylenglycole, Neopentylglycole, Neopentylglycole, die durch Halogene substituiert sind, Trimethylpentandiol, 1,4-Cyclohexandimethanol, schwere Diole, die aus Bisphenol A, Bisphenol F, Bisphenol AF erhalten werden, wobei die Bisphenole oxalkyliert sind, wobei die oben genannten Formeln wenigstens ein Halogen auf dem und/oder den aromatischen Ring(en) umfassen und die obigen Produkte, darunter der und/oder der (die) aromatischen Ring(e) wenigstens teilweise hydriert worden ist (sind), die schweren Polyole der Novolac-Typen und von Novolac-Cresoltypen.

7. Vorform nach Anspruch 5, **dadurch gekennzeichnet, dass** das Anhydrid oder die Säuren, die für die Synthese der ungesättigten Polyester verwendet werden, gewählt sind, aus der Gruppe, die gebildet wird durch das Maleinsäureanhydrid, Maleinsäure, Fumarsäure, Itaconsäure, Citraconsäure, Cyclansäuren, erhalten zum Beispiel ausgehend von dem Hexahydrophthalsäureanhydrid, Isophthalsäuren und Terephthalsäuren, den Anhydriden, wie zum Beispiel Tetrahydrophthalsäureanhydrid, Methylnorbornen-2,3-dicarboxyanhydrid (Methylnadic Anhydrid), Hexahydrophthalsäureanhydrid, Phtalsäureanhydride, die halogeniert sind, wie Tetrachlorphthalsäureanhydrid, Tetrobromphthalsäureanhydrid oder Hexachlor-Endomethylentetrahydrophthalsäureanhydrid.

8. Flexible Vorform nach einem der Ansprüche 1 bis 4, **dadurch gekennzeichnet, dass** das Harz, das wenigstens eine reaktive Mehrfachbindung umfasst, gewählt wird aus der Gruppe, die gebildet wird durch die Vinylester, die ausgehend von einer Verbindung synthetisiert werden, die wenigstens ein Diepoxid umfassen mit wenigstens einer ungesättigten Säure vom Acryltyp.

9. Flexible Vorform nach Anspruch 8, **dadurch gekennzeichnet, dass** die Säure vom Acryltyp gewählt wird aus der Gruppe, die gebildet wird durch Acrylsäure und Methacrylsäure und das Diepoxid gewählt wird aus der Gruppe, die gebildet wird durch Bisphenol A, Bisphenol F, Bisphenol AF, Novolac-Harze und Cresol-Novolac-Harze.

10. Flexible Vorform nach einem der Ansprüche 1 bis 9, **dadurch gekennzeichnet, dass** die radial ausbreitbare flexible Vorform wenigstens zwei unterschiedliche Harze enthält.

11. Vorform nach einem der Ansprüche 3 bis 10, **dadurch gekennzeichnet, dass** das polymerisierbare Oligomer und/oder Monomer, die in ihren Formeln wenigstens eine Mehrfachbindung umfassen, gewählt wird aus der Gruppe, die gebildet wird durch Styrol, Triacrylat von Trimethyolpropan, Divinylbenzol, Butylacrylat, tert.-Butylacrylat, 2-Ethylhexylacrylat, Methylacrylat, Ethylacrylat, Hydroxypropylacrylat, 2-Hydroxyethylacrylat, Methyl-Methacrylat, EthylMethacrylat, Monochlorstyrol, Dichlorstyrol, Monobromstyrol und Dibromstyrol, Vinyltoluol, Vinylacetat, Diallyl-ortho-phthalat, Diallyl-Isophthalat, Triallylcyanurat, Triallylcarbonat, Diallylglycolcarbonat, Acrylat oder Dimethacrylat von Bisphenol A, F oder AF, Diacrylat oder Dimethacrylat von Bisphenol A, F oder AF, das dioxalkyliert oder polyoxalkyliert ist, in welchen die Alkylgruppe(n) 2 bis 24 Kohlenstoffatome umfasst (umfassen).

12. Flexible Vorform nach einem der Ansprüche 1 bis 11, **dadurch gekennzeichnet, dass** die radial ausbreitbare Flexible Vorform wenigstens ein Harz enthält, das in seiner chemischen Formel wenigstens eine Mehrfachbindung umfasst und wenigstens einer kommerziellen Zusammensetzung zugeordnet ist, die nicht zu Familie der Phenylesterpolymere gehört, die gewöhnlich in Monomer- oder Oligomerform vorliegen.

13. Flexible Vorform nach einem der Ansprüche 1 bis 12, **dadurch gekennzeichnet, dass** die Polymerisationsreaktionen des Harzes in Abhängigkeit der Temperaturen gestartet werden, die von der biegsamen Vorform eingesetzt werden, durch Wahl von wenigstens einem geeigneten Starter, gewählt aus der Gruppe der organischen Peroxide.

14. Flexible Vorform nach einem der Ansprüche 1 bis 12, **dadurch gekennzeichnet, dass** die Polymerisationsreaktionen des Harzes in Abhängigkeit der von der biegsamen Vorform eingesetzten Temperaturen gestartet werden durch wenigstens einen Starter der Familie der Azo-Isobutyronitrile, vorzugsweise gewählt aus der Gruppe, die gebildet wird durch 2-2'-Azobis(Isobutyronitril) und 2-2'-Azobis-(2-Methylbutyronitril).

15. Flexible Vorform nach einem der Ansprüche 1 bis 12, **dadurch gekennzeichnet, dass** die Polymerisationsreaktionen des Harzes in Abhängigkeit der von der biegsamen Vorform eingesetzten Temperaturen gestartet werden durch wenigstens einen Starter, der gewählt wird aus der Gruppe, die gebildet wird durch Schwefel und Kaliumpersulfat mit einer Molekularformel K₂S₂O₈.

16. Flexible Vorform nach einem der Ansprüche 13 bis 15, **dadurch gekennzeichnet, dass** die Polymerisationsreaktionen des Harzes in Abhängigkeit der von der biegsamen Vorform eingesetzten Temperaturen gestartet werden durch wenigstens einen Starter, der einem Beschleuniger zugeordnet ist wie einem Kobaltsalz und/oder einem tertiären Amin.

17. Flexible Vorform nach einem der Ansprüche 13 bis 16, **dadurch gekennzeichnet, dass** die Polymerisationsreaktionen des Harzes in Abhängigkeit der von der biegsamen Vorform eingesetzten Temperaturen gestartet werden durch wenigstens einen Starter, der wenigstens einem Polymerisationsinhibitor zugeordnet ist wie die Hydroquinone, die tert.-Butylchatechole.

18. Flexible Vorform nach einem der Ansprüche 1 bis 17, **dadurch gekennzeichnet, dass** sie in ihrer Zusammensetzung wenigstens ein Harz mit einer Restlatenz nach einer Lagerung bei 22°C für eine Dauer gleich oder größer als 20 Tage, von wenigstens 3 Stunden bei einer Temperatur von 10°C bis 90°C enthält.

19. Flexible Vorform nach einem der Ansprüche 1 bis 17, **dadurch gekennzeichnet, dass** sie in ihrer Zusammensetzung wenigstens ein Harz mit einer Restlatenz nach einer Lagerung bei einer Temperatur unter oder gleich 4°C für eine Dauer von wenigstens 60 Tagen, von wenigstens 8 Stunden bei einer Temperatur von 40 bis 80°C enthält.

20. Vorform nach einem der Ansprüche 1 bis 19, **dadurch gekennzeichnet, dass** das Harz, das in seiner chemischen Formel wenigstens eine reaktive Mehrfachbindung umfasst, die in der Lage ist, später auf Verbindungen zu reagieren, die in deren Aufbau wenigstens eine reaktive Mehrfachbindung, umfassen, die terminal oder am Ende der Molekülkette und/oder in einer Seitengruppe ist, gewählt wird aus der Gruppe, die gebildet wird durch die Harze mit einer dynamischen Viskosität unter etwa 2500 mPa.s bei einer Temperatur von 20°C bis 70°C.

21. Vorform nach einem der Ansprüche 1 bis 20, **dadurch gekennzeichnet, dass** das in seiner chemischen Formel wenigstens eine reaktive Mehrfachbindung umfassende Harz, welches in der Lage ist, später auf Verbindungen zu reagieren, die in deren Aufbau wenigstens eine reaktive Mehrfachbindung umfassen, die terminal oder am Ende der anderen Molekülkette und/oder einer Seitengruppe angeordnet ist, gewählt wird aus der Gruppe, die gebildet wird durch die Harze, die es ermöglichen, manuell oder mechanisch oder durch das Injektionsverfahren unter Druck oder Vakuum Faserträger zu imprägnieren, die die Verstärkung der biegsamen Vorform bilden, wobei der Träger vorzugsweise gebildet wird aus der Gruppe, die gebildet wird durch die Glasfasern, Basaltfasern, Kohlefasern, Keramikfasern, Naturfasern, synthetischen Fasern und den Metallfasern.

22. Vorform nach einem der Ansprüche der 1 bis 21, **dadurch gekennzeichnet, dass** das Harz, das in seiner chemischen Formel wenigstens eine reaktive Mehrfachbindung umfasst, die in der Lage ist, später auf Verbindungen zu reagieren, die in deren Aufbau wenigstens eine reaktive Mehrfachbindung umfassen, die terminal oder angeordnet am Ende der anderen Molekülkette und/oder in einer Seitengruppe ist, gewählt ist aus der Gruppe, die gebildet wird durch die chemisch nicht aggressiven Harze oder durch Aufblähen elastischer Innen- und Außenhäute, die den Schutz der Vorform bilden.

23. Vorform nach einem der Ansprüche 1 bis 22, **dadurch gekennzeichnet, dass** das Harz in seiner chemischen Formel wenigstens eine reaktive Mehrfachbindung umfasst, die in der Lage ist, später auf Verbindungen zu reagieren, die in deren Aufbau wenigstens eine reaktive Mehrfachbindung umfassen, die terminal oder angeordnet am Ende der anderen Molekülkette und/oder in einer Seitengruppe ist, gewählt ist aus der Gruppe, die gebildet wird durch die Harze mit einer Polymerisationstemperatur, kompatibel mit der Hitzebeständigkeit der Polymere und elastischen Häute und Bestandteilen, die die Wände der Vorform bilden.

24. Flexible Vorform nach Anspruch 23, **dadurch gekennzeichnet, dass** die Polymerisationstemperatur des Harzes unterhalb oder gleich 160°C ist.

25. Vorform nach einem der Ansprüche 1 bis 24, **dadurch gekennzeichnet, dass** das Harz, das in seiner chemischen Formel wenigstens eine reaktive Mehrfachbindung umfasst, die in der Lage ist, später auf Verbindungen zu reagieren, die in deren Aufbau wenigstens eine reaktive Mehrfachbindung umfassen, die terminal oder angeordnet am anderen Ende der Molekülkette und/oder in einer Seitengruppe ist, gewählt wird aus der Gruppe, die gebildet wird durch die Harze, die nach Polymerisation in Kombination mit einem Faserträger ein Komposit bilden mit einer Erdölgewichtsabsorption unter 3% bei einer Temperatur von etwa 90°C.

26. Vorform nach einem der Ansprüche 1 bis 25, **dadurch gekennzeichnet, dass** das Harz, das in seiner chemischen Formel wenigstens eine reaktive Mehrfachbindung umfasst, die in der Lage ist, später auf Verbindungen zu reagieren, die in deren Aufbau wenigstens eine reaktive Mehrfachbindung umfassen, die terminal oder angeordnet ist am Ende der andere Molekülkette und/oder in einer Seitengruppe, gewählt wird aus der Gruppe, die gebildet wird durch die Harze, die nach Polymerisation in Kombination mit einem Faserträger einen Komposit bilden mit einer Wassergewichtsabsorption unter 4% bei einer Temperatur von etwa 90°C.

27. Vorform gemäß einem der Ansprüche 1 bis 26, **dadurch gekennzeichnet, dass** das Harz, das in seiner chemischen Formel wenigstens eine reaktive Mehrfachbindung umfasst, welche in der Lage ist, später auf Verbindungen zu reagieren, die in deren Aufbau wenigstens eine reaktive terminale oder am Ende der anderen Molekülkette und/oder in einer Seitengruppe angeordnete reaktive Mehrfachbindung umfassen, verbunden ist mit wenigstens einem Fließregler.

28. Flexible Vorform nach Anspruch 27, **dadurch gekennzeichnet, dass** der Fließregler gewählt ist aus der Gruppe, die gebildet wird durch die Polystyrole, Polyvinylacetate, die Polymethylmetacrylate und die Polycaprolactame.

## Claims

1. A radially deployable flexible preform to form, after deploying, a tubular structure that is curable by polymerisation after positioning it in a well or in a line and moulds to the shape thereof after curing, **characterised in that** it comprises in its constitution at least one resin comprising in its chemical formula at least one reactive multiple bond that is capable of subsequent reaction with compounds comprising in their constitution at least one terminal reactive multiple bond or a reactive multiple bond positioned at one end or the other of the molecular chain and/or on a pendant group.

2. A flexible preform according to claim 1, **characterized in that** the resin comprising at least one reactive multiple bond is selected from the group formed by unsaturated polyester resins and vinyl ester resins.

3. A flexible preform according to any one of claims 1 and 2, **characterized in that** the resin is associated with at least one polymerisable oligomer and/or at least one monomer comprising at least one multiple bond in their chemical formulae.

4. A flexible preform according to claim 3, **characterized in that** the resin is associated with at least one oligomer and/or at least one monomer selected from the group formed by vinyl, acrylic, methacrylic, allyl or maleic compounds.

5. A flexible preform according to any one of claims 1 to 4, **characterized in that** the resin comprising at least one reactive multiple bond is selected from the group formed by unsaturated polyester resins synthesised from at least one saturated or unsaturated polyol, and at least one saturated or unsaturated dibasic acid or anhydride, at least one of these compounds being an unsaturated compound.

6. A flexible preform according to claim 5, **characterized in that** the polyol used to synthesise the unsaturated polyesters is selected from the group formed by butylene glycols, neopentyl glycol, neopentyl glycols substituted by halogens, trimethylpentanediol, 1,4-cyclohexanedimethanol, heavy diols obtained from bisphenol A, bisphenol F, bisphenol AF, said bisphenols oxyalkylated, the formulae cited above comprising at least one halogen on the aromatic nucleus/nuclei, the above products wherein the aromatic nucleus/nuclei is/are at least partially hydrogenated, heavy novolac type alcohols, and cresol-novolac type cresols.

7. A preform according to claim 5, **characterized in that** the anhydride or acids used to synthesise the unsaturated polyesters is selected from the group formed by maleic anhydride, maleic acid, fumaric acid, itaconic acid, citraconic acid, cyclanic acids obtained, for example, from hexahydrophthalic anhydride, isophthalic and terephthalic acids, anhydrides such as tetrahydrophthalic anhydride, methylnadic anhydride, hexahydrophthalic anhydride, halogenated phthalic anhydrides such as tetrachlorophthalic anhydride, tetrabromophthalic anhydride or hexachloro-endomethylene tetrahydrophthalic anhydride.

8. A flexible preform according to any one of claims 1 to 4, **characterized in that** the resin comprising at least one reactive multiple bond is selected from the group formed by vinylester resins synthesised from a compound comprising at least one diepoxy compound on at least one acrylic type unsaturated acid.

9. A flexible preform according to claim 8, **characterized in that** the acrylic type acid is selected from the group formed by acrylic acid and methacrylic acid and the diepoxy compound is selected from the group formed by bisphenol A, bisphenol F, bisphenol AF, novolac resins and cresol-novolac resins.

10. A flexible preform according to any one of claims 1 to 9, **characterized in that** the radially deployable flexible preform contains at least two different resins.

11. A preform according to any one of claims 3 to 10, **characterized in that** the polymerisable oligomer and/or monomer comprising at least one multiple bond in its formula is selected from the group formed by styrene, trimethylolpropane triacrylate, divinyl benzene, butyl acrylate, tert-butyl acrylate, 2-ethylhexyl acrylate, methyl acrylate, ethyl acrylate, hydroxypropyl acrylate, 2-hydroxyethyl acrylate, methyl methacrylate, ethyl methacrylate, monochlorostyrene, dichlorostyrene, monobromostyrene, dibromostyrene, vinyl toluene, vinyl acetate, diallyl ortho-phthalate, diallyl isophthalate, triallyl cyanurate, triallyl carbonate, diallylglycol carbonate, bisphenol A, F or AF acrylate or dimethacrylate, dioxyalkylated or polyoxyalkylated bisphenol A, F or AF diacrylate or dimethacrylate in which the alkyl group(s) contains 2 to 24 carbon atoms

12. A flexible preform according to any one of claims 1 to 11, **characterized in that** the radially deployable flexible preform contains at least one resin comprising in its chemical formula at least one multiple bond and is associated with at least one commercially available composition not forming part of the sub family of polymer vinyl esters that are normally either in the form of monomers or oligomers.

13. A flexible preform according to any one of claims 1 to 12, **characterized in that** the resin polymerisation reactions are initiated as a function of the service temperatures employed for the flexible preform by selecting at least one suitable initiator selected from the group formed by the organic peroxides.

14. A flexible preform according to any one of claims 1 to 12, **characterized in that** the resin polymerisation reactions are initiated as a function of the service temperatures employed for the flexible preform by at least one initiator from the azoisobutyronitrile family, preferably selected from the group formed by 2,2'-azobis(isobutyronitrile) and 2,2'-azobis(2-methylbutyronitrile).

15. A flexible preform according to any one of claims 1 to 12, **characterized in that** the resin polymerisation reactions are initiated as a function of the service temperatures employed for the flexible preform by at least one initiator selected from the group formed by sulphur and potassium persulphate with molecular formula K₂S₂O₈.

16. A flexible preform according to any one of claims 13 to 15, **characterized in that** the resin polymerisation reactions are initiated as a function of the service temperatures employed for the flexible preform by at least one initiator associated with at least one accelerator such as a cobalt salt and/or a tertiary amine.

17. A flexible preform according to any one of claims 13 to 16, **characterized in that** the resin polymerisation reactions are initiated as a function of the service temperatures employed for the flexible preform by at least one initiator associated with at least one polymerisation inhibitor such as a hydroquinone or tertiobutyl catechol.

18. A flexible preform according to any one of claims 1 to 17, **characterized in that** it contains at least one resin with a residual latent period, after storage at 22°C for a period of 20 days or more, of at least 3 hours at a temperature of 10°C to 90°C.

19. A flexible preform according to any one of claims 1 to 17, **characterized in that** it contains at least one resin with a residual latent period, after storage at 4°C or less for a period of at least 60 days, of at least 8 hours at a temperature of 40°C to 80°C.

20. A flexible preform according to any one of claims 1 to 19, **characterized in that** the resin comprising at least one reactive multiple bond in its formula that can subsequently react with compounds comprising in their constitution at least one terminal reactive multiple bond or a reactive multiple bond located at one end or the other of the molecular chain and/or in a pendant group is selected from the group formed by resins with a dynamic viscosity of less than about 2500 mPa.s at a temperature of 20°C to 70°C.

21. A preform according to any one of claims 1 to 20, **characterized in that** the resin comprising at least one reactive multiple bond in its formula that can subsequently react with compounds comprising in their constitution at least one terminal reactive multiple bond or a reactive multiple bond located at one end or the other of the molecular chain and/or in a pendant group is selected from the group formed by resins that enable manual, mechanical or pressure or vacuum injection impregnation of fibrous supports constituting the reinforcement of said flexible preform, said support preferably being selected from the group formed by glass fibres, basalt fibres, carbon fibres, ceramic fibres, natural fibres, synthetic fibres and metal fibres.

22. A preform according to any one of claims 1 to 21, **characterized in that** the resin comprising at least one reactive multiple bond in its formula that can subsequently react with compounds comprising in their constitution at least one terminal reactive multiple bond or a reactive multiple bond located at one end or the other of the molecular chain and/or in a pendant group is selected from the group formed by non aggressive resins chemically or on inflating the internal and external elastic skins constituting the protection for the preform.

23. A preform according to any one of claims 1 to 22, **characterized in that** the resin comprising at least one reactive multiple bond in its formula that can subsequently react with compounds comprising in their constitution at least one terminal reactive multiple bond or a reactive multiple bond located at one end or the other of the molecular chain and/or in a pendant group is selected from the group formed by resins with a polymerisation temperature compatible with the heat resistance of the polymers and elastic skins and the components constituting the preform walls.

24. A flexible preform according to claim 23, **characterized in that** the resin polymerisation temperature is 160°C or less.

25. A preform according to any one of claims 1 to 24, **characterized in that** the resin comprising at least one reactive multiple bond in its formula that can subsequently react with compounds comprising in their constitution at least one terminal reactive multiple bond or a reactive multiple bond located at one end or the other of the molecular chain and/or in a pendant group is selected from the group formed by resins forming, after polymerisation in combination with a fibrous support, a composite with a petroleum absorption of less than 3% by weight at a temperature of about 90°C.

26. A preform according to any one of claims 1 to 25, **characterized in that** the resin comprising at least one reactive multiple bond in its formula that can subsequently react with compounds comprising in their constitution at least one terminal reactive multiple bond or a reactive multiple bond located at one end or the other of the molecular chain and/or in a pendant group is selected from the group formed by resins forming a composite having a water absorption of less than 4% by weight at a temperature of about 90°C after polymerisation in combination with a fibrous support.

27. A preform according to any one of claims 1 to 26, **characterized in that** the resin comprising at least one reactive multiple bond in its formula that can subsequently react with compounds comprising in their constitution at least one terminal reactive multiple bond or a reactive multiple bond located at one end or the other of the molecular chain and/or in a pendant group is associated with at least one flow regulator.

28. A flexible support according to claim 27, **characterized in that** the flow regulator is selected from the group formed by polystyrenes, polyvinylacetates, polymethylmethacrylates and polycaprolactames.
